Europäisches Patentamt

European Patent Office

Office européen des brevets

(19)

(11) Veröffentlichungsnummer: **0 110 338**

**B1**

(12) # EUROPÄISCHE PATENTSCHRIFT

(45) Veröffentlichungstag der Patentschrift:
03.09.86

(51) Int. Cl.⁴: **F 16 K 11/06**, F 16 K 27/04

(21) Anmeldenummer: **83111800.5**

(22) Anmeldetag: **25.11.83**

(54) **Ventilschieberplatte.**

(30) Priorität: **29.11.82 DE 3244119**

(43) Veröffentlichungstag der Anmeldung:
**13.06.84 Patentblatt 84/24**

(45) Bekanntmachung des Hinweises auf die Patenterteilung:
**03.09.86 Patentblatt 86/36**

(84) Benannte Vertragsstaaten:
**AT BE CH DE FR GB IT LI NL SE**

(56) Entgegenhaltungen:
**EP-A-0 021 029**
**WO-A-79/00134**
**DE-A-2 757 672**
**DE-A-3 131 916**
**US-A-3 533 436**
**US-A-4 010 772**

(73) Patentinhaber: **FRIEDRICH GROHE ARMATURENFABRIK GmbH & CO**, Hauptstrasse 137, D-5870 Hemer 1 (DE)

(72) Erfinder: **Herring, William Peter, Unter dem Asenberg 30, D-5870 Hemer 1 (DE)**
Erfinder: **Kostorz, Jan Ryszard, Frhr. von Dücker Strasse 2a, D-5750 Menden 2 (DE)**

LIBER, STOCKHOLM 1986

## Beschreibung

Die Erfindung betrifft eine Ventilschieberplatte mit den im Oberbegriff des Anspruchs 1 angegebenen Merkmalen. Ventilschieberplatten dieser Gattung sind aus der DE-A-27 57 672 bekannt. Bei diesem Ventilschieber ist die Schieberplatte mit einem Führungsteil bzw. Mitnahmeglied verschlossen. Zur Abdichtung der beiden Teile miteinander ist eine Verklebung oder die Zwischenlage von herkömmlichen Dichtringen etc. vorgeschlagen. Die Verklebung der beiden Teile ist insbesondere bei einer Serienfertigung problematisch und relativ zeitaufwendig. Bei einer Zwischenlage von Gummiringen etc. zwischen den beiden Teilen ist zur sicheren Abdichtung eine Vorspannung der Dichtringe erforderlich, die auch bei den maximal auftretenden Drücken des durchströmenden Fluids eine sichere Abdichtung gewährleistet. Diese relativ hohe Vorspannung der Dichtung bewirkt jedoch ein entsprechendes Aufpressen der Schieberplatte auf die Grundplatte, so daß hierdurch eine relativ hohe Schwergängigkeit des Ventile verursacht wird.

Der Erfindung liegt die Aufgabe zugrunde, eine Ventilschieberplatte mit einer Abdichtung zum Mitnahmeglied hin zu schaffen, die mit geringst möglichem Platzbedarf und einer vernachlässigbar kleinen Anpreßkraft eine sichere Abdichtung des Durchbruchs in der Ventilschieberplatte zum Mitnahmeglied gewährleistet.

Diese Aufgabe wird erfindungsgemäß mit den im kennzeichnenden Teil des Anspruchs 1 angegebenen Merkmalen gelöst. Weitere Ausgestaltungen der Erfindung sind in den Ansprüchen 2 und 3 angegeben.

Die mit der Erfindung erreichten Vorteile bestehen im wesentlichen darin, daß durch einstückige Ausbildung von Schieberplatte und Dichtung diese als ein Bauteil gehandhabt werden können und eine optimale Positionierung der Dichtung ermöglicht ist, wodurch die Dichtungsvorspannkräfte mimimiert werden können.

In weiterer Ausgestaltung der Erfindung kann durch die Ausbildung der Dichtung als Lippendichtung die Vorspannkraft auf ein vernachlässigbares Maß reduziert werden, da in Abhängigkeit vom den herrschenden Flüssigkeitsdruck entsprechend gestaltete Dichtlippen in die Dichtposition gepreßt werden.

Durch Ausbildung der Abdichtung als Membrane, die den Durchbruch völlig abdichtet, sind keinerlei Anpreßkräfte für die Abdichtung erforderlich. Lediglich zum Auffangen des Flüssigkeitsdrucks wird die Membrane von dem Mitnahmeglied gestützt.

Ausführungsbeispiele der Erfindung sind in der Zeichnung dargestellt und werden im folgenden näher erläutert. Es zeigt

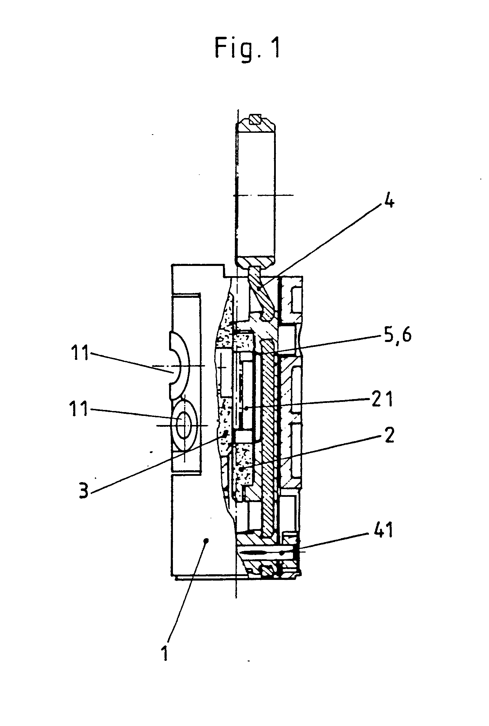

Figur 1 ein Wassermischventil für den Einsatz in Sanitärarmaturen, teilweise geschniten;

Figur 2 eine Schieberplatte mit Lippendichtung, wie sie in dem Mischventil gemäß Figur 1 eingesetzt werden kann, in Draufsicht und vergrößertem Maßstab;

Figur 3 die Schieberplatte gemäß Figur 2 im Seitenschnitt;

Figur 4 eine Schieberplatte gemäß Figur 2 mit einer Membrane;

Figur 5 einen Seitenschnitt der Schieberplatte gemäß Figur 4.

Das in der Zeichnung dargestellte Mischventil ist für den Einsatz in Sanitärarmaturen bestimmt und besteht aus einem Schiebergehäuse 1, in dem parallel zur Mittelachse eine Grundplatte 3 aus oxidkeramischem Material mit Durchtrittsöffnungen 11 für Kalt-, Warm- und Mischwasser ortsfest gelagert ist und an dem eine Schieberplatte 2, ebenfalls aus Oxidkeramikmaterial, angelagert ist, wobei die Berührungsflächen feinbearbeitet sind, so daß eine wasserdichte Anlage gewährleistet ist. Die Schieberplatte 2 ist von einem Mitnahmeglied 4 gehaltert, welches in dem Schiebergehäuse 1 parallel zur Mittelachse zur Durchflußmengenregulierung verschiebbar und um einen Drehpunkt 41 verschwenkbar zur Regulierung des Mischungsverhältnisses bzw. Bestimmung der Temperatur des austretenden Mischwassers angeordnet ist. Die Schieberplatte 2 hat zur wahlweisen Verbindung der Durchtrittsöffnungen 11 in der Grundplatte 3 einen als Durchbruch 21 ausgebildeten Überströmkanal.

Zur Abdichtung des Durchbruchs 21 gegenüber dem Mitnahmeglied 4 ist auf der Schieberplatte 2 eine Dichtung aufvulkanisiert.

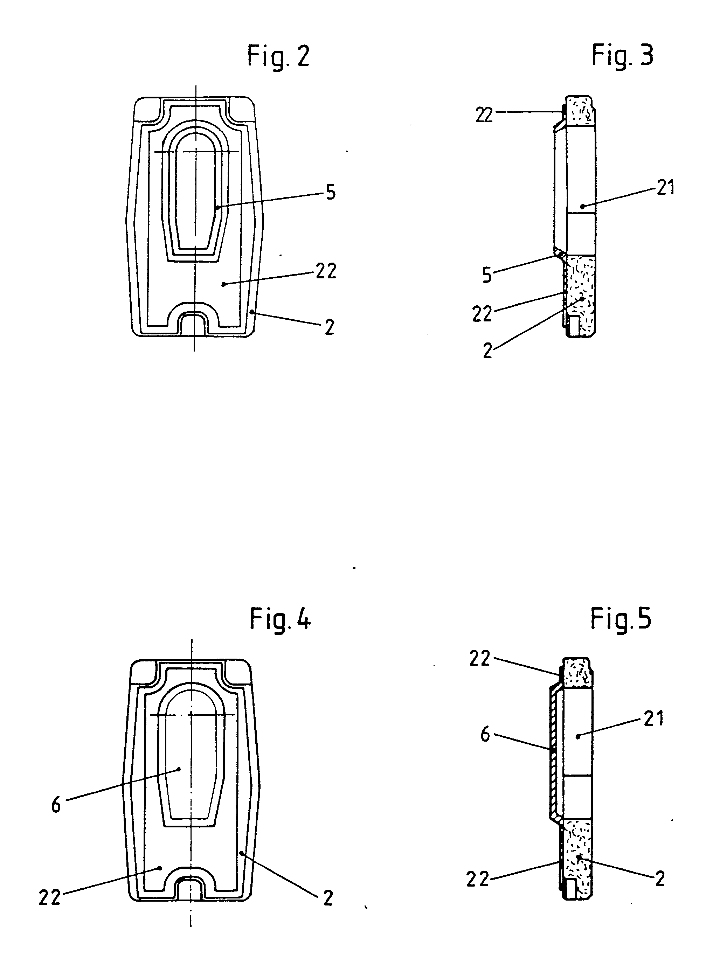

Gemäß dem in den Figuren 2 und 3 gezeigten Ausführungsbeispiel kann die Dichtung als Lippendichtung mit geneigt angeordneten Dichtlippen ausgebildet werden, so daß sie vom Wasserdruck in die Dichtposition gedrückt werden können. Durch diese Anordnung ist außerdem gewährleistet, daß zum Ausgleich von Fertigungstoleranzen die Dichtung durch entsprechende Umbiegung angeglichen werden kann, ohne daß dadurch ins Gewicht fallende zusätzliche Anpreßkräfte erzeugt werden. Die Lippendichtung 5 ist dabei auf der Schieberplatte 2 in den Bereichen 22 aufvulkanisiert.

Bei dem Ausführungsbeispiel gemäß den Figuren 4 und 5 der Zeichnung ist als Dichtung eine Membrane 6 vorgesehen, die in den Bereichen 22 auf der Schieberplatte 2 aufvulkanisiert ist. Durch diese Ausbildung sind keinerlei Anpreßkräfte für den dichten Abschluß erforderlich. Lediglich zur Abstützung der Membrane 6 gegenüber dem anstehenden Wasserdruck ist eine entsprechende Aufnahme an dem Mitnahmeglied 4 vorzusehen.

## Patentansprüche

1. Ventilschieberplatte, insbesondere für Sanitärarmaturen, aus Oxidkeramik oder einem ähnlich geeigneten Werkstoff mit wenigstens einem als Durchbruch (21) ausgebildeten Überströmkanal, wobei die Schieberplatte (2) einerseits von einem Mitnahmeglied (4) aufgenommen und der Überströmkanal von dem Mitnahmeglied (4) dicht verschlossen ist und andererseits an einer ortsfest gehaltenen Grundplatte (3) mit Fluiddurchtrittsöffnungen (11) verschiebbar angelagert ist, dadurch gekennzeichnet, daß auf der Schieberplatte (2) in den Bereichen um den Durchbruch (21) herum eine an dem Mitnahmeglied (4) anliegende Dichtung aufvulkanisiert ist, zur Abdichtung des Durchbruchs (21) gegenüber dem Mitnahmeglied (4).

2. Ventilschieberplatte nach Anspruch 1, dadurch gekennzeichnet, daß die Dichtung als Lippendichtung (5) ausgebildet ist, deren Dichtlippen durch Umbiegung den Durchbruch (21) zum Mitnahmeglied (4) abdichten.

3. Ventilschieberplatte nach Anspruch 1, dadurch gekennzeichnet, daß die Dichtung als Membrane (6) ausgebildet ist, die den gesamten Durchbruch (21) abdichtet und sich am Mitnahmeglied (4) abstützt.

**Claims**

1 Valve slide-plate, especially for sanitary fittings, made of oxide ceramics or a similarly suitable material, having at least one overflow channel in the form of an opening (21), the slide-plate (2) being retained on one side by a carrier member (4) and the overflow channel being tightly sealed by the carrier member (4) and the slide-plate being displaceably mounted on the other side on a base plate (3) which is held in a fixed position and has openings (11) for the passage of fluid, characterised in that for the purpose of sealing the opening (21) with respect to the carrier member (4), a seal that rests on the carrier member (4) is vulcanised on the slide-plate (2) in the regions around the opening (21).

2. Valve slide-plate according to claim 1, characterised in that the seal is designed as a lip seal (5) the sealing lips of which seal off the opening (21) from the carrier member (4) by being bent over.

3. Valve slide-plate according to claim 1, characterised in that the seal is designed as a membrane (6) which seals off the entire opening (21) and is supported on the carrier member (4).

**Revendications**

1°) Plaque de tiroir de boisseau notamment pour des robinets sanitaires, en céramique oxyde ou en un matériau analogue approprié, avec au moins un canal de debordement réalisé sous la forme d'un passage (21), la plaque de tiroir (2) étant reçue d'une part dans un organe d'entraînement (4) et le canal de débordement étant ferme de façon étanche par l'organe d'entraînement (4) et d'autre part en étant montée coulissante sur une plaque de base (3), fixe munie d'orifices de passage de fluide (11), caractérisée en ce que la plaque de tiroir (2) comporte dans les zones entourant le passage (21), un joint fixé par vulcanisation et s'appuyant contre l'organe d'entraînement (4) pour assurer l'étanchéité du passage (21) par rapport à l'organe d'entraînement (4).

2°) Plaque de tiroir de boisseau selon la revendication 1, caractérisée en ce que le joint est en forme de joint à lèvres (5) dont les lèvres d'étanchéité assurent par deformation, l'étanchéité entre le passage (21) et l'organe d'entraînement (4).

3°) Plaque de tiroir de boisseau selon la revendication 1, caractérisée en ce que le joint est en forme de membrane (6) qui assure l'étanchéité de l'ensemble du passage (21) et s'appuie sur l'organe d'entraînement (4).

Fig. 1

**Fig. 2**

**Fig. 3**

**Fig. 4**

**Fig. 5**